(19) Europäisches Patentamt / European Patent Office / Office européen des brevets

(11) **EP 2 697 612 B1**

(12) **FASCICULE DE BREVET EUROPEEN**

(45) Date de publication et mention
de la délivrance du brevet:
**10.11.2021 Bulletin 2021/45**

(21) Numéro de dépôt: **12713995.4**

(22) Date de dépôt: **13.04.2012**

(51) Int Cl.:
*G01H 9/00* *(2006.01)*    *G01V 1/18* *(2006.01)*

(86) Numéro de dépôt international:
**PCT/EP2012/056740**

(87) Numéro de publication internationale:
**WO 2012/140179 (18.10.2012 Gazette 2012/42)**

(54) **HYDROPHONE TOUT OPTIQUE INSENSIBLE A LA TEMPERATURE ET A LA PRESSION STATIQUE**

GEGENÜBER TEMPERATUR ODER STATISCHEM DRUCK UNEMPFINDLICHES REIN OPTISCHES HYDROPHON

ALL-OPTICAL HYDROPHONE THAT IS NOT SENSITIVE TO TEMPERATURE OR STATIC PRESSURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2011 FR 1101165**

(43) Date de publication de la demande:
**19.02.2014 Bulletin 2014/08**

(73) Titulaire: **THALES
92400 Courbevoie (FR)**

(72) Inventeurs:
• **DOISY, Martine
F-06130 Plascassier (FR)**
• **LAUNAY, François-Xavier
06110 LE CANNET (FR)**
• **LARDAT, Raphaël
F-06330 Roquefort-Les-Pins (FR)**
• **ROUX, Gérard
F-06650 Opio (FR)**

(74) Mandataire: **Marks & Clerk France
Immeuble "Visium"
22, avenue Aristide Briand
94117 Arcueil Cedex (FR)**

(56) Documents cités:
WO-A1-03/106940      WO-A1-2010/136723
US-A1- 2002 154 860      US-B1- 6 563 970

• **None**

**EP 2 697 612 B1**

**Description**

L'invention concerne le domaine général des transducteurs acoustiques sous-marins ou hydrophones. Elle concerne plus particulièrement les hydrophones optiques à base de laser à fibre optique.

En ce qui concerne la réalisation de transducteurs acoustiques sous-marins, l'utilisation de fibres optiques est une solution connue qui présente des avantages reconnus parmi lesquels on trouve en premier lieu le faible encombrement d'un hydrophone réalisé en utilisant une telle technologie, ainsi que la possibilité de réaliser un assemblage d'hydrophones à partir d'une même fibre en multiplexant sur cette même fibre les informations de variation de pression détectées par les différents hydrophones formant cet assemblage, chaque hydrophone étant associé à une longueur d'onde donnée.

Cependant, afin de disposer d'une sensibilité suffisante pour être capable d'écouter un niveau de signal acoustique très faible, typiquement un niveau inférieur au bruit de mer force 0 selon l'échelle de knudsen, il est connu qu'il est nécessaire d'amplifier la déformation de la fibre optique induite par l'onde de pression au moyen d'un dispositif acousto-mécanique approprié.

Il existe actuellement deux classes principales d'hydrophones à fibre optique capables d'écouter un niveau de bruit inférieur au bruit de mer 0 et donc potentiellement utilisables dans les réseaux d'hydrophones ou dans des antennes à hydrophones pour applications sous-marines : les hydrophones interférométriques à bobine de fibre optique et les hydrophones à cavité laser à fibre optique.

Dans les hydrophones interférométriques à bobine de fibre optique, la grandeur optique mesurée est la variation de phase optique cumulée sur la longueur totale d'une fibre optique (20 à 100m typiquement), bobinée sur un mandrin conforme, configuré de façon à ce que son diamètre varie sous l'effet de la pression acoustique à mesurer ce qui induit une variation dynamique de la longueur de la fibre optique qui y est enroulée, un mandrin à air par exemple.

La variation dynamique de la longueur de la fibre optique se traduit par une variation de la phase du signal transporté par la fibre. Ainsi, pour une fibre optique monomode standard en silice, on peut montrer que la variation relative de la phase du signal est égale à environ 0,78 fois la déformation relative de la longueur de la fibre. Cette variation de phase peut être mesurée avec la précision nécessaire en plaçant l'hydrophone dans le bras d'un interféromètre à fibre optique déséquilibrée de type Michelson par exemple.

Ce type d'hydrophone présente l'inconvénient principal de ne pas pouvoir être suffisamment miniaturisé. En effet, afin de transmettre les informations relatives aux mesures de pressions réalisées par chaque hydrophone constituant un réseau, différentes techniques d'interrogation et de multiplexage bien connues de l'homme du métier peuvent être mises en œuvre. Elles ont pour objet de permettre de relier, à l'aide d'une fibre optique unique l'ensemble des hydrophones associés au sein d'un même réseau au système chargé d'exploiter ces mesures. Cependant, le multiplexage sur une seule fibre optique d'un grand nombre d'hydrophones nécessite que les pertes d'insertion de ceux-ci le long de la fibre optique soit faibles, inférieures à 1dB typiquement. Ceci implique que, dans chaque hydrophone, la fibre optique soit bobinée sur un mandrin présentant un diamètre minimum, de façon à limiter au minimum les pertes liées à la courbure de la fibre. Or, même en utilisant des fibres optiques microstructurées à très faible rayon de courbure admissible (Fibre pour les applications FTTH), de bonnes performances en sensibilité et en perte d'insertion sont difficiles à atteindre avec un diamètre d'enroulement sensiblement inférieur de 15 ou 20mm.

Par ailleurs, dans la mesure où chaque hydrophone constituant le réseau mesure une simple valeur de pression, il est nécessaire d'introduire dans le réseau d'hydrophone, un ou plusieurs capteurs de référence à bobine à fibre optique, non soumis à la pression acoustique, pour s'affranchir par soustraction des variations de la sensibilité intrinsèque de la bobine de fibre optique à la pression statique et à la température. Cette méthode présente l'inconvénient d'avoir à rajouter des capteurs supplémentaires et de limiter le domaine d'utilisation de l'hydrophone en immersion (dynamique limitée du capteur)

Les hydrophones à cavité laser à fibre optique permettent de réaliser des hydrophones à haute sensibilité, c'est-à-dire capables d'écouter un faible niveau de bruit de mer. Leur emploi permet de mettre en œuvre des techniques de traitement optique cohérent pour mesurer avec précision les variations de fréquence du signal optique véhiculé par la fibre. Une telle variation est ici consécutive à la réception d'un signal acoustique par un réseau de Bragg inscrit dans une fibre optique active, une fibre optique dopée Erbium ou Erbium/Yttrium pour une émission autour de 1,5 $\mu$m par exemple.

De manière connue un réseau de Bragg inclut, à proximité de son centre, un saut de phase sensiblement égal à $\pi$ de façon à constituer une cavité laser monofréquence, le pompage optique de la cavité étant réalisé par l'intermédiaire d'une diode (diode de pompage) qui peut être déportée à grande distance via une fibre optique standard. La fréquence d'émission de la cavité laser ainsi constituée dépend du pas du réseau de Bragg et de la phase du déphasage centrale. Par suite, si l'on déforme uniformément la cavité laser, la fréquence d'émission du laser variera dans les mêmes proportions avec un coefficient de 0,78 lié aux propriétés élasto-optiques de la silice constituant la fibre.

Il est ainsi possible de multiplexer en longueur d'onde plusieurs hydrophones à cavité laser présentant des longueurs d'onde de fonctionnement différentes, se situant dans la bande d'amplification du matériau dopant de la fibre optique active : environ 40 hydrophones, par exemple, dans le cas d'une fibre dopée Erbium, pour des longueurs d'onde situées sur la grille ITU 100GHz de la bande C de l'Erbium.

Cependant, la déformation axiale induite par une pression acoustique appliquée directement sur la surface externe de la cavité laser n'est pas suffisante pour obtenir la sensibilité hydrophonique compatible d'un niveau inférieur au bruit de mer force 0, compte tenu de la DSP (densité spectrale de puissance) du bruit intrinsèque du laser (de l'ordre de $20\,\mathrm{Hz}/\sqrt{\mathrm{Hz}}$ à 1kHz) qui limite le bruit du système d'interrogation. On peut montrer en effet qu'il est nécessaire de disposer d'une sensibilité hydrophonique supérieure à au moins 100 ou 110 dB Hz/Pa pour être capable de réaliser l'écoute d'un bruit de mer 0 selon l'échelle de Knudsen dans une bande d'environ 10Hz à 10kHz.

Par suite, il est nécessaire d'amplifier la déformation de la cavité induite par la pression acoustique au moyen d'un dispositif acousto-mécanique. Compte tenu de la sensibilité intrinsèque de la cavité laser à une déformation, l'objectif à atteindre pour le dispositif acousto-mécanique est de l'ordre du nanostrain/Pa avec une réponse stable dans une large bande de fréquence. Plusieurs configurations connues permettent d'atteindre ces valeurs. Néanmoins, dans toutes ces configurations, l'hydrophone conserve une sensibilité intrinsèque à la température au moins égale à celle de la cavité laser ainsi qu'une sensibilité à la pression statique, à moins d'être associé à un filtre hydrostatique volumineux.

La demande de brevet WO2010/135723 divulgue un hydrophone à cavité laser à fibre optique présentant au moins une membrane déformable solidaire de ladite fibre optique fixée au corps rigide délimitant la cavité laser. La membrane est déformable par une différence des pressions exercées sur ses faces, entraînant une variation de la longueur de la fibre optique.

Ainsi, en l'état actuel de l'art antérieur, aucune solution technique appartenant à l'une ou l'autre de ces deux classes ne permet d'assurer, de manière intrinsèque, l'insensibilité d'un hydrophone à fibre optique aux variations de pression statique aussi bien qu'aux variations de température. Or le fonctionnement d'un hydrophone dans des conditions d'environnement variées (variation d'immersion et de température, accélération), n'est réellement possible que si le comportement de ce dernier est réellement indépendant de la profondeur d'immersion, autrement dit de la pression statique, de la température ainsi que des accélérations.

Par ailleurs, dans le cas de réseaux de capteurs il est également très important de disposer de capteurs acoustiques présentant des longueurs d'onde d'interrogation stables, de façon à pouvoir accéder aux différents capteurs via une fibre optique unique par multiplexage et à réaliser le multiplexage et le démultiplexage en longueur d'onde des informations de pression transmise par les différents capteurs en utilisant simplement des composants passifs à fibres optiques.

Un but de l'invention est de proposer une structure permettant de réaliser un hydrophone optique intrinsèquement insensible aux variations de pression statique et de température, et présentant une très bonne sensibilité hydrophonique. Un autre but de l'invention est de proposer une structure présentant un volume faible. Un autre but encore est de proposer une structure permettant de réaliser un hydrophone optique capable de fonctionner de manière satisfaisante dans une large bande de fréquence et jusqu'à des immersions très élevées avec une très faible sensibilité aux accélérations.

A cet effet l'invention a pour objet un hydrophone à cavité laser du type comportant un élément de fibre optique active avec des réseaux de Bragg inscrits dans la fibre optique formant la cavité laser comportant une structure mécanique définissant une cavité remplie d'un fluide, à l'intérieur de laquelle l'élément de fibre optique est placé le long de l'axe longitudinal de la cavité, la structure mécanique comportant en outre :

- un corps rigide creux définissant la cavité à l'intérieur de laquelle est placé l'élément de fibre optique, le corps rigide étant sensiblement cylindrique et/ou à symétrie de révolution autour de l'axe longitudinal,
- deux bouchons configurés et agencés pour obturer les extrémités du corps rigide, traversés par l'élément de fibre optique, ledit élément de fibre optique étant fixé aux bouchons au niveau des points de traversée de façon à être en permanence en tension ;

les deux bouchons présentant chacun une partie rigidement liée au corps rigide et une partie mobile comprenant une paroi déformable apte à être déformée lorsqu'elle est soumise à des variations de la pression exercée par le milieu extérieur dans lequel est plongé l'hydrophone, la déformation des bouchons entraînant une variation de la longueur de l'élément de fibre optique, chacun des deux bouchons présentant une forme de corps creux ouvert à une extrémité étant inséré dans la cavité définie par le corps rigide de façon à en obturer l'extrémité, le corps creux présentant une paroi latérale définissant une cavité interne et la paroi déformable, perpendiculaire à l'axe longitudinal de la cavité et obturant l'extrémité de la cavité interne, la paroi latérale comprenant un segment C distant de la paroi interne du corps rigide de sorte à se déformer librement dans le sens longitudinal sous l'effet d'une variation de la température du milieu extérieur dans lequel est plongé l'hydrophone, entraînant une variation de la longueur de l'élément de fibre optique qui compense au moins partiellement les variations de la fréquence d'émission de la cavité laser consécutives à ces variations de température,
la structure mécanique comportant en outre un orifice de traversée pour faire communiquer la cavité avec le milieu extérieur et réaliser un équilibrage de la pression statique entre le milieu extérieur et le fluide contenu dans la cavité.

Selon un mode de réalisation particulier, dans lequel le fluide contenu dans la cavité est peu ou pas visqueux, les dimensions, longueur $l_{trou}$ et section $S_{trou}$, de l'orifice de traversée sont déterminées, compte tenu de la viscosité du fluide contenu dans la cavité de l'hydrophone, de façon que la cavité de l'hydrophone présente, compte tenu de son volume $V_{cavité}$, une loi de variation de sa sensibilité, en fonction de la fréquence de variations de pression, comprenant une sensibilité sensiblement constante sur une plage donnée de fréquences, inférieures à la fréquence F2, comprise entre la fréquence F2, correspondant au pic de résonance mécanique de la cavité, et un pic de résonance à une fréquence F1 égale à la fréquence de Helmholtz $f_H$ de la cavité définie par:

$$f_H = \frac{c}{2\pi} \sqrt{\frac{S_{trou}}{V_{cavité} l_{trou}}}$$

Où c représente la célérité des ondes acoustiques dans le fluide considéré, et où la fréquence $f_H$ est la plus faible possible.

Selon une variante du mode de réalisation précédent où le fluide contenu dans la cavité est visqueux, la fréquence F1 est égale à la fréquence de coupure $f_p$ de la cavité définie par la relation:

$$f_P = \frac{R_{trou}{}^4 \rho c^2}{16 \eta l_{trou} V_{cavité}}$$

où $\rho$ représente la masse volumique du fluide, c la célérité des ondes sonores dans le fluide , $R_{trou}$ le rayon de l'orifice et $\eta$ est la viscosité du fluide, où la fréquence fp est la plus faible possible.

Selon un mode de réalisation particulier, la paroi latérale comporte en outre un premier segment B pour lequel l'épaisseur du matériau constituant la paroi est déterminée de façon à ce que la paroi latérale du bouchon entre en contact étroit (étanche) avec la paroi interne du corps rigide, de façon à assurer une liaison rigide entre le corps rigide et le bouchon.

Selon une variante du mode de réalisation précédent, la paroi latérale du bouchon comporte en outre un segment terminal A dont l'épaisseur définit un épaulement qui vient en butée sur l'extrémité du corps rigide lorsque le bouchon est mis en place sur celui-ci.

Selon une forme de réalisation particulière, la cavité hébergeant l'élément de fibre optique contient une mousse ouverte, ladite mousse étant imbibée du fluide contenu dans la cavité, le matériau constituant la mousse amortissant les modes propres de résonance de l'élément de fibre optique.

Selon un mode de réalisation particulier, l'orifice de traversée est un orifice circulaire pratiqué à travers la paroi du corps rigide.

Selon un autre mode de réalisation particulier, l'orifice de traversée est un orifice circulaire pratiqué longitudinalement dans l'épaisseur de la paroi latérale d'un bouchon.

Selon une autre forme de réalisation particulière, le corps rigide est réalisé en titane ou en verre.

Selon une autre forme de réalisation particulière, les bouchons sont réalisés en plastique PPO ou en polyoxyméthylène (POM) ou encore en polyformaldéhyde.

Selon un exemple ne faisant pas partie de l'invention, le corps rigide ou les bouchons étant réalisés en totalité ou en partie dans un matériau poreux, l'orifice de traversée est constitué par les pores du matériau.

Les caractéristiques et avantages de l'invention seront mieux appréciés grâce à la description qui suit, description d'un exemple de réalisation particulier, non limitatif de la portée de l'invention, qui s'appuie sur les figures annexées qui représentent:

- la figure 1, une illustration schématique présentant la structure générale de l'hydrophone selon l'invention;
- la figure 2, une illustration schématique présentant la structure générale des bouchons constituant les extrémités de l'hydrophone selon l'invention;
- les figures 3 et 4, des illustrations présentant le comportement de l'hydrophone selon l'invention sous l'action des variations dynamiques de la pression exercée par le milieu extérieur;
La figure 5, une courbe présentant l'allure de la loi de variation de la sensibilité d'un hydrophone selon l'invention en fonction de la fréquence de variation de la pression exercée par le milieu extérieur;

- la figure 6, une courbe présentant l'allure de la variation de la sensibilité de l'hydrophone selon l'invention en fonction de la compressibilité du fluide contenu dans la cavité de l'hydrophone;
- les figures 7 et 8, des illustrations présentant la structure de l'hydrophone selon l'invention dans une forme particulière de réalisation.

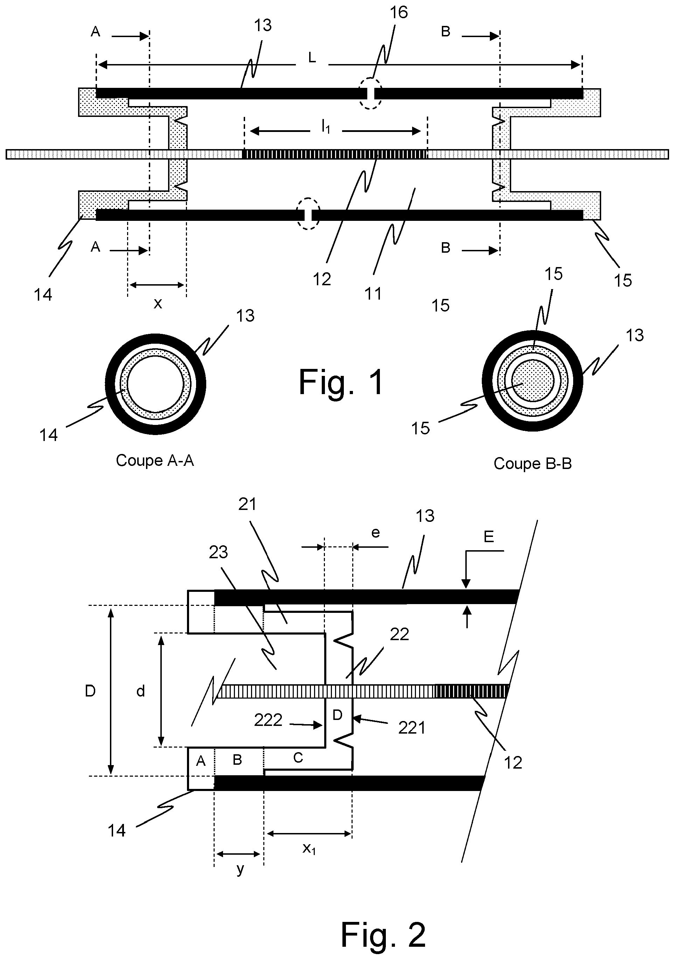

La suite de la description présente les caractéristiques de l'hydrophone optique selon l'invention, au travers d'un mode de réalisation préféré, pris ici comme exemple de réalisation non limitatif de la portée ou de l'étendue de l'invention. La structure de ce mode de réalisation particulier ainsi que l'exposé de son principe de fonctionnement est notamment illustré par les figures 1 à 6.

L'hydrophone selon l'invention comporte une structure mécanique protectrice définissant une cavité 11 à l'intérieur de laquelle un élément de fibre optique à réseau de Bragg 12 est placé. Outre une fonction protectrice, cette cavité a également pour fonction, de manière connue, d'amplifier la déformation axiale imposée à l'élément de fibre optique 12 par la pression dynamique exercée par le milieu extérieur.

De manière connue, l'élément de fibre optique 12 constituant la cavité laser monofréquence à fibre optique à réseau de Bragg, qui forme la partie sensible de l'hydrophone, remplit trois fonctions distinctes:

- une fonction de capteur de pression exploitant la variation de fréquence d'émission de la cavité laser associée à une déformation élastique axiale, en étirement et/ou en rétraction, de la cavité à fibre optique qui constitue l'élément principal du capteur ;
- une fonction de transmission du signal lumineux portant la mesure;
- une fonction de multiplexage grâce à la sélectivité en longueur d'onde donnée par le réseau de Bragg constitué par l'élément de fibre optique 12, partie active de l'hydrophone.

Dans la suite du texte, dans la mesure où les caractéristiques de la cavité laser monofréquence à fibre optique utilisée sont du domaine connu, on décrit plus particulièrement les caractéristiques techniques de la structure mécanique formant la cavité 11 de l'hydrophone selon l'invention renfermant l'élément de fibre optique 12.

D'un point de vue général, comme l'illustrent les figures 1 et 2, l'hydrophone optique selon l'invention est ainsi constitué d'une structure mécanique comportant un corps rigide de forme cylindrique 13 fermé de chaque côté par un bouchon 14 ou 15.

De manière générale dans le cadre de l'invention on considère la notion de cylindre dans sa définition la plus générale. On considère ici la définition mathématique du cylindre, celui-ci pouvant par exemple être un prisme droit dans le cas d'une base en forme de polygone ou d'un cylindre de révolution dans le cas d'une base circulaire.

Pour minimiser la sensibilité aux accélérations transversales parasites, il est cependant préférable d'utiliser un cylindre de révolution pour son axi-symétrie qui confère une certaine insensibilité à ce type d'accélérations. De plus, de par l'existence d'un plan de symétrie du cylindre, perpendiculaire à la fibre, l'utilisation d'un cylindre de révolution permet également de minimiser la sensibilité aux accélérations axiales parasites.

Dans un mode de réalisation préféré, le corps rigide est donc un cylindre droit de révolution dont la droite génératrice est l'axe de la fibre optique.

Alternativement, dans un autre mode de réalisation, le corps rigide est un hyperboloïde ou un ellipsoïde généralisé. Par ailleurs, comme dans le cas du cylindre de révolution, une géométrie de révolution permet de minimiser la sensibilité aux accélérations transversales parasites.

Ainsi, si on définit le repère orthonormé (Oxyz) où O est le centre de la fibre et (Oz) est l'axe de la fibre, on obtient alors l'équation générique qui définit un hyperboloïde ou un ellipsoïde de révolution :

$$x^2 + y^2 = f(z)$$

avec f est une fonction strictement positive.

On peut alors minimiser la sensibilité aux accélérations axiales parasites si z = 0 est un plan de symétrie. Pour cela, la fonction f doit être une fonction paire.

Les bouchons 14 et 15 sont configurés de façon à former deux pistons localisés aux deux extrémités du corps cylindrique dont le déplacement, la déformation, sous l'action des variations de la pression exercée par le milieu, fait varier le volume de la cavité 11 ainsi que la longueur de l'élément de fibre optique à réseau de Bragg 12 logé dans cette cavité.

L'élément de fibre optique 12, formant la partie active de l'hydrophone, est placé le long de l'axe central du corps cylindrique 13 définissant la cavité 11. Il pénètre et sort ainsi de la cavité 11 en traversant les parois des bouchons 14 et 15, parois auxquelles il est fixé de telle façon que lorsque l'hydrophone est assemblé, il subit une pré-tension. De la sorte, la déformation (le déplacement) des bouchons 14 et 15 sous l'action de la pression exercée par le milieu 2. entraîne systématiquement une variation de la longueur de l'élément de fibre optique 12 enfermé dans la cavité 11.

Le dispositif selon l'invention comporte également un ou plusieurs orifices de traversée 16 dont la fonction est de mettre le milieu intérieur contenu dans la cavité 11, délimitée par le corps cylindrique 13 et les deux bouchons 14 et 15, en permanence en contact avec le milieu extérieur. Les orifices 16 permettent avantageusement aux pressions régnant à l'intérieur et à l'extérieur de la cavité 11 de s'équilibrer de sorte que le dispositif est ainsi insensible à la pression statique. Par suite la pression statique étant identique à l'intérieur et à l'extérieur de la cavité 11, les pistons formés par les bouchons 14 et 15 ne subissent pas son influence. Par suite, l'élément de fibre optique à réseau de Bragg 12 ne subit de la part des bouchons aucune contrainte consécutive à la pression statique exercée sur ces derniers.

Selon l'invention, les caractéristiques dimensionnelles de la cavité 11 formée ainsi que la taille et l'agencement des bouchons 14 et 15 et des orifices de communication 16 sont déterminés de façon à réaliser les fonctionnalités suivantes:

- une amplification mécanique suffisante de la déformation causée par la pression dynamique exercée par le milieu extérieur sur l'élément de fibre optique 12, pour atteindre la sensibilité hydrophonique visée;
- un filtrage hydrostatique passe-bas destiné à mettre la cavité laser, constituée par l'élément de fibre optique 12, en équi-pression avec la pression du milieu environnant l'hydrophone, pour les variations de pression de fréquence inférieure à une fréquence de coupure donnée;
- une compensation des variations de la fréquence d'émission de la cavité laser à fibre optique 12 avec la température;
- une minimisation de sensibilité aux accélérations parasites.

Par suite, selon l'invention, le corps cylindrique 13, est constitué par un tube cylindrique réalisé dans un matériau rigide le rendant peu déformable sous l'effet de la pression.

Dans une forme de réalisation préférée, il est réalisé en titane, le titane étant choisi pour sa rigidité et sa faible dilatation thermique. Alternativement il peut également être réalisé dans tout matériau rigide approprié, compatible avec le fluide de remplissage.

De structure rigide, le corps cylindrique 13 ne prend ainsi avantageusement qu'une part négligeable dans la déformation d'ensemble. Il ne prend ainsi aucunement part à l'amplification de la déformation exercée par la structure sur la cavité optique constituée par l'élément de fibre optique 12, cette amplification étant assurée par les bouchons 14 et 15.

L'épaisseur E de la paroi du corps cylindrique 13, généralement constante, est également définie pour assurer la rigidité nécessaire compte-tenu de la pression maximale que celui-ci doit subir. Sa longueur L est quant à elle imposée par la longueur de la portion de fibre optique qu'elle doit héberger, cette longueur étant, de préférence, suffisante pour que l'élément de fibre optique 12 soit fixé aux bouchons 14 et 15 dans une zone 18 ou 19 de simple conduction lumineuse, qui ne correspond pas au réseau de Bragg formant la cavité laser, le réseau de Bragg, de longueur $l_1$, n'étant ainsi pas directement fixé aux bouchons 14 et 15 par ses extrémités.

Le diamètre intérieur D du corps cylindrique 13 est quant à lui défini en fonction des caractéristiques dimensionnelles imposées aux bouchons 14 et 15 pour remplir leur fonction d'amplification et de compensation des effets des variations de température sur le comportement de la cavité optique formée par l'élément de fibre optique 12.

Selon l'invention, les bouchons 14 et 15 sont, quant à eux, configurés pour remplir différentes fonctions:

- une fonction classique d'obturation du corps cylindrique 13 dont l'objet est de fermer hermétiquement la cavité 11 de telle façon que le milieu intérieur ne communique directement avec le milieu extérieur que par les orifices 16 ménagés dans la structure de l'hydrophone;
- une fonction de maintien en tension de l'élément de fibre optique logé dans la cavité 11, en particulier de l'élément 12 qui forme la cavité laser;
- une fonction de modulation de la tension appliquée à l'élément de fibre optique, en fonction des variations de la température du milieu;
- une fonction de piston permettant de faire varier la longueur de l'élément de fibre optique 12 logé dans la cavité 11 sous l'action des variations dynamiques de pression exercées sur l'hydrophone, un accroissement de pression se traduisant par un déplacement des bouchons, ou du moins de l'extrémité interne des bouchons, vers l'intérieur de la cavité 11 et par une diminution de la tension imposée à l'élément de fibre optique 12 et une baisse de pression se traduisant par un déplacement inverse et par un accroissement de la tension imposée à l'élément de fibre optique 12.

Par suite, pour remplir ces fonctions, différents modes de réalisation des bouchons 14 et 15 sont envisageables, en particulier des modes de réalisation mettant en œuvre des bouchons présentant une partie, rigidement liée au corps cylindrique 13, destinée à maintenir le bouchon en place sur celui-ci, et une partie mobile ou libre de se déformer pouvant se déplacer à l'intérieur de la cavité, vers le centre de la cavité ou vers son extrémité, en entraînant dans son mouvement l'élément de fibre optique 12 qui lui est attachée.

A cet effet les bouchons 14 et 15 peuvent donc, par exemple, être constitués, au moins en partie, d'un matériau élastique, un matériau sensiblement moins rigide que le matériau constituant le corps cylindrique 13, en plastique PPO de type **Noryl®** par exemple ou encore en polyoxyméthylène (POM) ou en polyformaldéhyde, de type **Delrin®** par exemple.

La figure 2 présente la structure des bouchons mis en œuvre dans la forme de réalisation préférée prise comme exemple.

Dans ce mode de réalisation particulier chaque bouchon 14 ou 15 est formé par un corps creux comprenant une paroi 21. Cette paroi 21 définit une cavité cylindrique 23 au sens mathématique du terme. Dans le cas où cette cavité cylindrique est un cylindre à proprement parler, elle présente un diamètre interne constant d. La cavité cylindrique 23 présente un axe de symétrie confondu avec celui du corps cylindrique et d'une paroi élastique D 22, par exemple en forme de disque, perpendiculaire à l'axe de symétrie de la cavité cylindrique 11 et obturant l'une des extrémités de la cavité 23, l'autre extrémité étant ouverte. Le bouchon ainsi constitué est destiné à être inséré dans la cavité 11 par son extrémité obturée par la paroi 22. Le corps creux et la paroi 21 sont, par exemple, des corps cylindriques au sens mathématique du terme.

Selon ce mode de réalisation, la paroi 21 est une paroi dont l'épaisseur non constante définit essentiellement deux segments distincts B et C pour lesquels le bouchon présente des diamètres extérieurs distincts. Toutefois, cette paroi pourrait aussi comprendre uniquement le segment libre C.

La paroi 21 du bouchon comporte donc un premier segment B dont l'épaisseur est définie de façon à ce que lorsque celui-ci est inséré dans la cavité 11 de l'hydrophone sa paroi, au niveau du segment B, soit mis en contact étroit, de préférence étanche, avec la paroi interne du corps cylindrique 13, par emmanchement serré par exemple, de telle sorte que la paroi du bouchon soit maintenue en position fixe dans la cavité 11 de l'hydrophone au niveau du segment B.

Elle comporte également un deuxième segment C dont l'épaisseur est plus faible que celle du segment B. De la sorte, le segment C n'étant pas en contact avec la paroi interne du corps cylindrique 13, il apparait libre de se dilater ou de se contracter longitudinalement, en fonction des variations de température notamment.

Selon une forme de réalisation particulière, la paroi 21 peut encore comporter un segment terminal A dont l'épaisseur définit un épaulement qui vient en butée sur l'extrémité du corps cylindrique 13 lorsque le bouchon est mis en place sur le corps cylindrique 13.

Il est à noter que les bouchons peuvent en fonction de la forme géométrique du corps rigide 13 être de forme cylindrique, hyperboloïde ou ellipsoïde à condition toutefois qu'ils présentent les 3 segments : le segment B en contact étroit et étanche avec le corps rigide, le segment C libre de se dilater avec les variations de température et dont la longueur projetée sur l'axe de la fibre est égale à x et la paroi D, 22 perpendiculaire à la fibre.

Autrement dit, le bouchon comprend une partie rigidement liée au corps 13. Cette partie rigidement liée au corps cylindrique 13 comprend les parties A et B mais pourrait aussi bien être réalisée différemment du moment que le bouchon soit rigidement lié au corps cylindrique 13.

La partie du bouchon libre de se déformer pouvant se déplacer à l'intérieur de la cavité, entraînant dans son mouvement l'élément de fibre optique 12 comprenant la partie C qui est libre de se dilater ou de se contracter longitudinalement en fonction des variations de température. Cette partie comprend également la membrane D.

Chacun des deux bouchons doit en fait présenter une partie rigidement liée au corps 13 et une partie mobile par rapport au corps 13 comprenant une paroi déformable apte à être déformée lorsqu'elle est soumise à des variations de la pression exercée par le milieu extérieur dans lequel est plongé l'hydrophone, la déformation des bouchons entraînant une variation de la longueur de l'élément de fibre optique 12. La paroi déformable présente une face interne 221 tournée vers, c'est-à-dire faisant face à, l'intérieur de la cavité et une face externe 222 tournée vers l'extérieur de la cavité. Elles est agencée de façon que sa face interne 221 soit mobile en translation par rapport au corps rigide 13 selon l'axe longitudinal de la cavité sous l'effet d'une variation de la température du milieu extérieur dans lequel est plongé l'hydrophone; entrainant une variation de la longueur de l'élément de fibre optique 12 qui compense au moins partiellement les variations de la fréquence d'émission de la cavité laser consécutives à ces variations de température.

Le matériau et la géométrie des parties mobiles de chacun des bouchons comprenant la longueur de la partie mobile de chacun des bouchons sont telles que la déformation des bouchons sous l'effet d'une augmentation de température entraîne une diminution de la longueur de la fibre maintenue entre les deux bouchons qui a pour effet de diminuer voire annuler l'augmentation de la longueur d'onde d'émission de la cavité laser due à l'augmentation de l'indice optique de la fibre sous l'effet de cette augmentation de température.

Dans l'invention, la paroi déformable est la paroi élastique 22. Cette paroi est mobile en translation selon l'axe longitudinal sous l'effet de variations de température du fait que la partie C est apte à se contracter ou se dilater librement selon la direction longitudinale sous l'effet de variations de température ce qui entraîne un déplacement de la paroi élastique 22 selon la direction longitudinale par rapport au corps 13.

Les bouchons , dans des exemples ne faisant pas partie de l'invention, pourraient être réalisés différemment.

7

On pourrait concevoir des bouchons présentant une partie fixe par rapport au corps rigide 13 et une partie mobile en translation par rapport au corps 13 selon l'axe de la cavité constitué d'une paroi déformable 22 perpendiculaire à l'axe de la cavité. Le mouvement de translation de la face interne 221 selon l'axe de la cavité serait alors engendré par la dilation et la contraction de la paroi déformable.

D'un point de vue dynamique, le fonctionnement du dispositif selon l'invention comporte trois états:

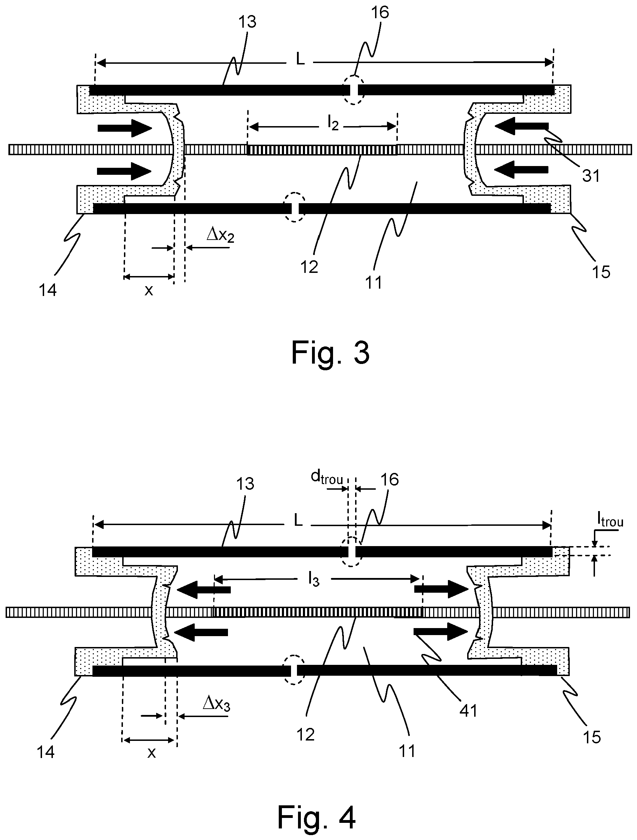

- Un état de repos, illustré par la figure 1 pour lequel la pression à l'intérieur de la cavité et la pression du milieu extérieur sont identiques. Dans cet état, les contraintes exercées par le milieu extérieur et par le milieu intérieur sur les bouchons, sur les parois 22 en particulier, s'équilibrent de sorte que ceux-ci ne subissent aucune déformation (i.e. ni étirement ni compression).
- Un premier état dynamique, illustré par la figure 3, pour lequel la pression exercée par le milieu extérieur subit un accroissement rapide entraînant l'apparition d'une pression résultante, matérialisée par les flèches 31 sur la figure 3. Cette pression résultante a pour effet d'entraîner une déformation des parois élastiques 22 des bouchons 14 et 15, qui se traduit, dans le cas de la forme de réalisation préférée prise comme exemple, par une flexion $\Delta x_2$ de la paroi élastique 22 du bouchon à l'intérieur de la cavité de l'hydrophone. Cette déformation, qui induit une diminution du volume de la cavité et qui a pour conséquence d'augmenter la pression interne, se poursuit jusqu'à ce que les pressions interne et externe s'équilibrent à nouveau. Sur la figure 3, la position initiale du bouchon est représentée en trait pointillé.
- Un deuxième état dynamique, illustré par la figure 4, pour lequel la pression exercée par le milieu extérieur subit une diminution rapide entraînant l'apparition d'une pression résultante, matérialisée par les flèches 41 sur la figure 4. Cette pression résultante a pour effet d'entrainer une déformation des bouchons 14 et 15 qui se traduit, dans le cas de la forme de réalisation préférée prise comme exemple, par une flexion inverse $\Delta x_3$ de la paroi élastique 22 du bouchon. Cette déformation, qui induit une augmentation du volume de la cavité et qui a pour conséquence de diminuer la pression interne se poursuit jusqu'à ce que les pressions internes et externe s'équilibrent à nouveau. Sur la figure 4, la position initiale du bouchon est représentée en trait pointillé.

Selon l'invention, l'élément de fibre optique 12 est, comme cela a été dit précédemment, fixé à la paroi 22 de chacun des bouchons qui ferme la cavité de telle façon que, lorsque l'hydrophone est assemblé, il subisse une pré-tension. La valeur de cette pré-tension est définie de façon à ce que lorsque le bouchon subit son allongement maximum sous l'action d'un accroissement de la pression du milieu extérieur, allongement éventuellement cumulé, avec les variations de longueur dues à la température, l'élément de fibre optique 12 se rétracte mais reste néanmoins sous l'effet d'une tension résiduelle qui le maintient rectiligne, en tension, comme l'illustre la figure 3. Ainsi lorsque la pression résultante varie entre une valeur maximale (positive) et la valeur minimale (négative) considérées en passant par une valeur nulle (équilibre des pressions), l'élément de fibre optique 12 voit sa longueur varier d'une valeur maximale $l_3$ à une valeur minimale $l_2$ en passant, à l'équilibre, par une longueur $l_1$ tout en restant cependant toujours en tension et ce, quelle que soit la température considérée dans la gamme de température visée.

D'un point de vue dimensionnel, le dispositif selon l'invention est défini de façon à répondre à différentes exigences.

Ainsi, la longueur L du corps cylindrique 13 est déterminée, dans un mode de réalisation préféré, à la fois par la longueur de l'élément de fibre optique à réseau de Bragg 12 logé dans la cavité, longueur imposée par construction, et dans une moindre mesure, par la fréquence de résonance de la cavité.

Ainsi encore, les dimensions de l'orifice (des orifices) de traversée 16, orifice(s) mis en place selon l'invention de façon à assurer l'insensibilité du dispositif à la pression statique, sont définies de façon à disposer d'une plage optimale de fréquence d'utilisation, c'est-à-dire une plage de fréquences sur laquelle la sensibilité du dispositif est conforme à la valeur attendue.

En pratique, les dimensions de l'orifice 16 peuvent être déterminées en assimilant ce dernier à un cylindre de rayon $R_{trou}$ et de longueur $l_{trou}$ et en considérant la courbe de variation de la sensibilité d'une cavité aux variations de pression en fonction de la fréquence de ces variations.

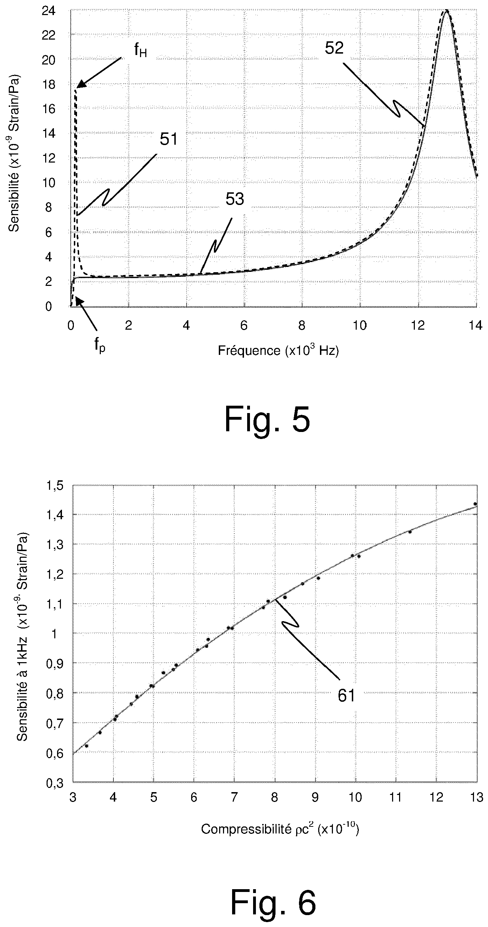

Comme on peut le constater sur l'illustration de la figure 5, une cavité telle que celle constituée par le dispositif selon l'invention, présente, sous l'effet de variations de la pression et du fait de la présence de l'orifice 16 et de la viscosité du milieu à l'intérieur de la cavité notamment, un ou deux pics de résonances 51 et 52 à des fréquences $f_1$ et $f_2$, ces fréquences étant définies à la fois par le volume de la cavité et les dimensions ($R_{trou}$ et $l_{trou}$).

Sur les deux courbes de la figure 5, on distingue, en fonction de la viscosité du fluide contenu dans la cavité, deux comportements distincts en basses fréquences, c'est à dire face à des variations à basse fréquence de la pression exercée par le milieu. Le premier comportement, illustré par la courbe en trait pointillé, correspond à celui des fluides peu visqueux ou non visqueux, tandis que le second comportement, illustré par la courbe en trait plein, correspond à celui des liquides visqueux. Le premier comportement se traduit par la présence de deux pics 51 et 52, tandis que le second comportement se traduit par la présence d'un seul pic 52.

En ce qui concerne les fluides peu visqueux, le pic 51 indique que le comportement de la cavité aux très basses fréquences est assimilable à celui d'une cavité de Helmholtz. Le pic de résonnance 51 apparaît pour des variations de basses fréquences en particulier lorsque le fluide à l'intérieur de la cavité est considéré comme non visqueux et/ou lorsque le trou est de relativement grand diamètre, de l'ordre du mm par exemple. On observe que, pour ces basses fréquences, la cavité a un comportement similaire à une cavité de Helmholtz et que la fréquence de résonance correspondant au pic 51 est proche de la fréquence de résonance de Helmholtz de la cavité. Or, dans le cas d'un résonateur de Helmholtz, on modélise généralement la cavité par un système masse-ressort, le trou se comportant comme une masse et la cavité jouant le rôle d'une raideur. Conformément à ce modèle, pour peu que l'on considère que le cylindre est rigide, la fréquence de résonance est alors définie par la relation suivante:

$$ f_H = \frac{1}{2\pi} \sqrt{\frac{k}{m}} \qquad [1] $$

Avec $m = m_{trou} = \rho S_{trou} l_{trou}$

Par suite, la raideur d'une cavité remplie d'un fluide étant définie, par analogie avec celle d'une poutre, par la relation:

$$ k = k_{cavité} = \frac{\rho c^2 S_{trou}^2}{V_{cavité}}, \qquad [2] $$

La fréquence de Helmholtz a pour expression:

$$ f_H = \frac{c}{2\pi} \sqrt{\frac{S_{trou}}{V_{cavité} l_{trou}}} \qquad [3] $$

En ce qui concerne les fluides plus visqueux, la cavité aux très basses fréquences est simplement assimilable à un système du premier ordre modélisé par un écoulement de Poiseuille à travers le trou, système satisfaisant la relation suivante:

$$ Q = \frac{\pi R_{trou}^4}{8\eta L_{trou}} \Delta P \qquad [4] $$

dans laquelle Q représente le débit à travers le trou, $\eta$ la viscosité du fluide et $\Delta P$ la différence de pression entre l'intérieur et l'extérieur de la cavité au niveau du trou.

La pression à l'intérieur de la cavité satisfait alors l'équation différentielle :

$$ \frac{dP}{dt} + \frac{\pi R_{trou}^4 \rho c^2}{8\eta L_{trou} V_{cavité}} P = \frac{\pi R_{trou}^4 \rho c^2}{8\eta L_{trou} V_{cavité}} P_0 \qquad [5] $$

La fréquence de coupure $f_p$ du système constitué par le trou, l'orifice de traversée, est alors définie par la relation:

$$ f_P = \frac{R_{trou}^4 \rho c^2}{16\eta L_{trou} V_{cavité}} \qquad [6] $$

Comme l'illustre la figure 5, on distingue entre les deux pics de résonance 51 et 52, ou entre la fréquence fp (non représentée sur la figure car trop proche de zéro pour l'échelle utilisée) et la fréquence du pic de résonance 52 dans le cas d'un fluide visqueux, une plage de fréquences intermédiaires pour laquelle la cavité présente une sensibilité non négligeable, sensiblement constante, dans laquelle la cavité est susceptible d'être utilisée pour servir d'amplificateur des déformations propres de la fibre. En effet, passé le premier pic 51, ou la fréquence de coupure $f_p$ dans le cas d'un fluide visqueux, l'orifice 16 se comporte comme s'il était obturé de sorte que les variations de la pression extérieure ne sont transmises au milieu intérieur que par les mouvements de piston suivis par les deux bouchons, ou plus exactement par la paroi élastique 22 du bouchon libre de se déformer, mouvements qui sont transmis à l'élément de fibre optique 12.

Il est à noter que le second pic de résonance correspond ici à une résonance purement mécanique qui a les deux bouchons pour origine, résonance dont la fréquence dépend donc essentiellement de la géométrie des bouchons.

Selon un mode de réalisation, la géométrie de la cavité est donc optimisée pour obtenir une bande d'utilisation la plus large possible. Autrement dit, la géométrie de la cavité est optimisée pour obtenir que la fréquence $f_1$ du premier pic, ou la fréquence de coupure $f_p$ dans le cas d'un fluide visqueux, soit la plus basse possible et pour que la fréquence $f_2$ du second pic soit la plus haute possible.

Or, outre les paramètres entrant dans les expressions de $f_H$ et $f_p$ (cf. relations 3 et 6), un certain nombre de paramètres, tels que les paramètres géométriques de la cavité, du piston et du trou ainsi que le matériau utilisé pour le piston ou encore le fluide à l'intérieur de la cavité, peuvent jouer sur ces fréquences de résonance : des études paramétriques menées par ailleurs sur l'influence de la géométrie de l'hydrophone sur les valeurs des deux fréquences, $f_1$ ou fp d'une part et $f_2$ d'autre part, permettent de mettre en évidence divers résultats.

On constate ainsi que, pour un fluide remplissant la cavité de viscosité donnée, le diamètre de l'orifice 16 n'influe pas de manière sensible sur la fréquence $f_2$ du second pic 52. En revanche, on constate que la fréquence $f_1$ du premier pic 51, de même que la fréquence fp, augmente avec le diamètre de l'orifice. Il est donc avantageusement possible d'ajuster la valeur des fréquences f1 ou fp, de la cavité en choisissant le diamètre de l'orifice de manière appropriée.

On constate ainsi également que, contrairement à ce qui ce passe pour l'orifice 16, le diamètre de la cavité influe sur les valeurs des fréquences $f_1$ ou fp d'une part et $f_2$ d'autre part. On constate plus précisément que les valeurs de $f_1$, ou fp, et $f_2$ varient dans le même sens en fonction du diamètre de la cavité, vers des valeurs d'autant plus faibles que le diamètre est plus grand. Il est ainsi avantageusement possible d'ajuster la position de la plage de fréquence utile en choisissant le diamètre de la cavité de manière appropriée.

On constate encore que, comme précédemment mais de manière moindre, la longueur de la cavité influe simultanément sur les valeurs des fréquences $f_1$ ou fp, et $f_2$, les valeurs de $f_1$, ou fp, et $f_2$ variant vers des valeurs d'autant plus faibles que la longueur de la cavité est plus grande.

Il est à noter que d'autres paramètres peuvent également influer, quoique plus légèrement, sur la position sur l'axe des fréquences et sur la largeur de la bande d'exploitation de l'hydrophone. On peut citer par exemple l'élasticité du matériau utilisé pour réaliser les bouchons obturant la cavité du dispositif selon l'invention ou encore la nature du fluide à l'intérieur de la cavité. Cependant, dans la mesure où ces paramètres permettent d'ajuster d'autres caractéristiques de fonctionnement du dispositif, ces derniers ne sont pas pris en compte pour ajuster la plage de fonctionnement du dispositif.

Du point de vue dimensionnel également, le diamètre, ou plus généralement l'ouverture, du corps cylindrique 13 détermine les dimensions des bouchons et en particulier des dimensions de la paroi cylindrique 21 d'un bouchon.

Les dimensions d'un bouchon sont, quant à elles, déterminées de façon à obtenir l'amplification voulue de la déformation longitudinale imposée à l'élément de fibre optique par les variations de pression et pour compenser les effets des variations de la température sur la longueur I de l'élément de fibre optique.

En particulier, l'insensibilité du dispositif selon l'invention aux variations de température est réalisée en jouant sur la géométrie des bouchons. En effet, les variations de température provoquent d'une part une variation d'indice dans la fibre 12 et d'autre part une variation de la longueur des bouchons 14 et 15 à l'origine de l'élongation ou de la rétractation de la fibre 12.

Par suite, un choix judicieux des dimensions des bouchons, pour un matériau de bouchon donné, permet de compenser exactement ou sensiblement la variation de la fréquence d'émission de la cavité laser à fibre optique 12 sous l'action de la température en faisant varier la longueur de cet élément de fibre optique en fonction de la température.

Ainsi, pour une variation de température $\Delta T$, la variation de la longueur d'onde $\lambda$ due à la variation de l'indice n de l'élément de fibre optique 12 est définie par la relation :

$$\frac{\Delta\lambda}{\lambda} = \frac{1}{n} \cdot \frac{dn}{dT} \cdot \Delta T \qquad [7]$$

Or la variation de la longueur d'onde $\lambda$ en fonction de la variation de la longueur L de la fibre est définie par la relation :

$$\frac{\Delta\lambda}{\lambda} = K \cdot \frac{\Delta L_{fibre}}{L_{fibre}} \qquad\qquad [8]$$

Par suite, pour compenser la variation d'indice, la variation de la longueur $L_{fibre}$ pour une variation de température $\Delta T$ doit entraîner une variation de la longueur d'onde $\lambda$ opposée à la variation causée par la variation de l'"indice n. La variation de la longueur $L_{fibre}$ est donc ainsi définie par l'égalité suivante:

$$\frac{\Delta L_{fibre}}{L_{fibre}} = -\frac{1}{Kn} \cdot \frac{dn}{dT}\Delta T . \qquad\qquad [9]$$

Or, en ce qui concerne le dispositif selon l'invention, si l'on considère que le corps cylindrique 13 définissant la cavité est rigide et peu sensible aux variations de température considérés, il est avantageusement possible d'exprimer l'élongation $\Delta L_{fibre}$ subie par l'élément de fibre optique 12 logé dans la cavité, élément solidaire des bouchons 14 et 15, en fonction de la variation de longueur des bouchons sous l'effet de la variation de température $\Delta T$ et donc de dimensionner les bouchons de façon appropriée pour que leur variation de longueur entraine la variation $\Delta L_{fibre}$ de longueur de la fibre permettant de compenser exactement ou sensiblement la variation de l'indice n. Ceci peut être réalisé de plusieurs manières.

Dans le cas du mode de réalisation préféré servant de support à la description de l'invention, illustré par les figures 1 et 2 notamment, le dimensionnement du bouchon est réalisé en considérant que $\Delta L_{fibre}$ est défini par les relations suivantes:

$$\begin{aligned} \Delta L_{fibre} &= \Delta L_{tube} - 2\Delta x \\ &= \alpha_{tube} \cdot L_{tube}\Delta T - 2\alpha_{piston} \cdot x\ \Delta T \\ &= \alpha_{tube} \cdot (L_{fibre} + 2x)\Delta T - 2\alpha_{piston} \cdot x\Delta T \end{aligned} \qquad [10]$$

Dans lesquelles $\alpha_{tube}$ et $\alpha_{piston}$ représentent les coefficients de dilatation thermique des matériaux constituant respectivement le corps cylindrique 13 et les bouchons 14 et 15 ou, du moins, la section libre C, des bouchons et $\Delta T$ la variation de température. La longueur x est la longueur de la partie mobile qui est, ici, la longueur de la section libre C.

Par suite, pour réaliser une compensation en température efficace, les dimensions des bouchons doivent être déterminées de façon à ce que la longueur x soit définie par la relation suivante:

$$x = \frac{L_{fibre}}{2(\alpha_{piston} - \alpha_{tube})} \cdot \left( \alpha_{tube} + \frac{1}{Kn} \cdot \frac{dn}{dT} \right) \qquad\qquad [11]$$

On rappelle que $L_{fibre}$ est la longueur de la fibre, que $\alpha_{tube}$ et $\alpha_{piston}$ représentent les coefficients de dilatation thermique des matériaux constituant respectivement le corps cylindrique 21 et les bouchons 14, 15 ou, du moins, la section libre C, n représente l'indice de la cavité, dn/dT la variation de l'indice de la cavité par unité de température.

On remarque que cette longueur x est indépendante de $\Delta T$ et ne dépend que des propriétés des matériaux utilisés et de la longueur $L_{fibre}$ de la fibre fixée entre les bouchons.

De manière générale, le bouchon peut présenter des formes différentes, mais il est toujours possible de trouver un matériau et une géométrie de la partie mobile des bouchons qui satisfasse la relation 9 dans une large gamme de température. Dans le cas d'une géométrie complexe, un calcul thermique tridimensionnel par la méthode des éléments finis permet d'arriver à la longueur optimale de la partie mobile des bouchons.

Il est à noter que d'un point de vue pratique, afin d'éviter une trop grande longueur de piston, il est avantageux d'utiliser, comme cela a été dit précédemment, un matériau ayant une dilatation thermique faible pour réaliser le corps cylindrique 13 et un matériau se dilatant fortement pour réaliser les bouchons 14 et 15. On peut choisir par exemple du titane pour le corps cylindrique ($\alpha_{tube}$ = 8.6 $\mu$m/m/K) et du Delrin® pour le piston ($\alpha_{piston}$ = 90 $\mu$m/m/K). On obtient alors, pour une longueur de fibre de 42.5 mm, une longueur x égale à 4,7 mm.

Comme cela a été dit précédemment, le dispositif selon l'invention est donc défini d'un point de vue structurel, comme un dispositif comportant un corps cylindrique 13 en matériau rigide, à faible coefficient de dilatation et des bouchons 14 et 15 en matériau à fort coefficient de dilatation, ces éléments définissant une cavité dans laquelle est logée l'élément de fibre optique à réseau de Bragg 12. Tel qu'il est défini et indépendamment du fluide remplissant la cavité, le dispositif est avantageusement peu sensible aux variations de température et aux variations de pression statique. Il permet avantageusement d'amplifier les variations de longueur imposées à l'élément de fibre optique 12 par les variations dynamiques de pression. Cependant, des études menées par ailleurs mettent en évidence que la nature du fluide contenu dans la cavité conditionne la sensibilité du dispositif.

En pratique, la sensibilité de cet hydrophone dépend peu des paramètres géométriques. Elle dépend majoritairement de la compressibilité du fluide utilisé. Par suite, il est donc possible d'augmenter la sensibilité de l'hydrophone selon l'invention en utilisant un fluide plus compressible que l'eau pour remplir la cavité de l'hydrophone. On peut ainsi, par exemple, choisir une huile à la place de l'eau. La courbe de la figure 6 donne l'allure 61, pour une variation dynamique de pression de fréquence égale à 1 kHz, de la variation de la sensibilité d'un hydrophone optique selon l'invention en fonction de la compressibilité du fluide utilisé pour remplir la cavité.

Comme cela a également été mentionné dans le texte qui précède, l'élément de fibre optique 12 logé dans la cavité est fixé aux bouchons 14 et 15 de façon à subir une précontrainte en tension dont la valeur est définie de façon à ce que quelle que soient les variations dynamique de pression imposées par le milieu extérieur et ce, quel que soit l'allongement du aux variations de température, il soit maintenu en tension. Par suite l'élément de fibre 12 se comporte comme une corde vibrante dont la fréquence de résonance dépend de sa longueur libre et de sa masse linéique ainsi que de la précontrainte qui lui appliquée.

Cette précontrainte a pour conséquence de conférer à l'élément de fibre 12 des fréquences propres de résonance, dont les valeurs sont directement dépendantes de la pré-tension appliquée. Or, dans le cadre de l'invention, la précontrainte en tension appliquée à la fibre dépend directement de la gamme de température de fonctionnement. En effet, l'insensibilité en température du dispositif selon l'invention est obtenue en faisant varier la longueur de l'élément de fibre de façon à ce que la longueur d'onde $\lambda$ reste constante. La variation de la longueur de la fibre est elle-même induite par la déformation des bouchons auxquels elle est fixée sous l'action de la température, la déformation axiale notamment.

Par suite, la force de traction F appliquée à l'élément de fibre 12 étant fixée, il en est de même pour les modes propres de vibration de l'élément de fibre 12. Or un ou plusieurs de ces modes propres peuvent correspondre à des fréquences de résonance situées dans la plage d'utilisation du dispositif de sorte que pour ces fréquences, la sensibilité du dispositif se trouve altérée.

Ces modes propres peuvent être déterminés de manière connue en considérant la force de traction F appliquée à l'élément de fibre 12 pour maintenir celui-ci en pré-tension et la vitesse de propagation d'une onde de déformation le long de la corde vibrante que constitue cet élément.

En effet, la force de traction F appliquée à l'élément de fibre 12 peut être définie par la relation suivante:

$$F = kx = \frac{ES}{l} \delta L \qquad [12]$$

où E représente le module d'Young de la silice (matériau constituant la fibre), où S et l représentent respectivement la section et la longueur de la fibre, et où $\delta L$ représente l'allongement imposé à la fibre. Cet allongement est déterminé en prenant en compte l'allongement de la fibre en fonction de la variation de température considérée.

La vitesse de propagation v d'une onde dans la corde vibrante constituée par l'élément de fibre 12, soumis à la force de tension F, est par ailleurs définie par l'expression :

$$v = \sqrt{\frac{F}{\mu}} \qquad [13]$$

Où $\mu$ la masse linéaire de la fibre.

Les modes propres de vibration de la corde sont quant à eux obtenus pour des longueurs d'onde telles que :

$$L = \frac{n\lambda}{2} \qquad [14]$$

où L représente la longueur de la fibre et n un entier.

Par suite, les fréquences propres de résonance de la corde vibrante que constitue l'élément de fibre optique 12 sont définies par la relation suivante:

$$f = \frac{n}{2L}\sqrt{\frac{T}{\mu}} \qquad\qquad [15]$$

Ainsi, par exemple, pour un élément fibre optique de longueur l = 42mm réalisé à partir d'une fibre de silice de diamètre égal à 250$\mu$m et présentant une variation relative de longueur égale à 9,36 $\mu$m/m/°C, l'allongement $\delta$L de la fibre obtenu pour une variation de température de 50°C est sensiblement égal à 23,4$\mu$m et la tension F à appliquer est sensiblement égale à 0,6N. L'application de cette tension induit elle-même l'apparition de fréquences propres de résonance au niveau de l'élément de fibre optique 12, fréquences propres dont la première à une valeur sensiblement égale à 1500Hz.

Par suite, si cette valeur est située dans la plage de fréquence d'utilisation de l'hydrophone, ce mode propre de résonance sera excité dès lors qu'une accélération transverse de fréquence identique sera exercée par le milieu extérieur. Une telle accélération, due essentiellement à des perturbations mécaniques occasionnées, par exemple, par les mouvements de l'antenne acoustique dans laquelle est intégré l'hydrophone, introduit une perturbation de la sensibilité de l'hydrophone.

Par suite, dans une telle configuration, il devient nécessaire d'amortir les modes propres de vibration de l'élément de fibre optique 12.

Selon l'invention, cet amortissement peut être obtenu en jouant sur la viscosité du fluide contenu dans la cavité de l'hydrophone.

Alternativement, il peut également être obtenu en enferment l'élément de fibre 12 à l'intérieur d'un cylindre métallique rempli de gel et de centrer ce cylindre à l'intérieur de la cavité de l'hydrophone, cavité elle-même remplie d'un fluide servant à transmettre les variations de pression imposées par le milieu extérieur.

Alternativement encore, il peut également être obtenu en remplissant la cavité de l'hydrophone à l'aide d'une mousse ouverte, imprégnée de fluide La nature de la mousse est alors déterminée de façon à ce qu'elle amortisse les vibrations de l'élément de fibre optique 12 sans modifier sensiblement le comportement de la cavité vis-à-vis des variations de pression.

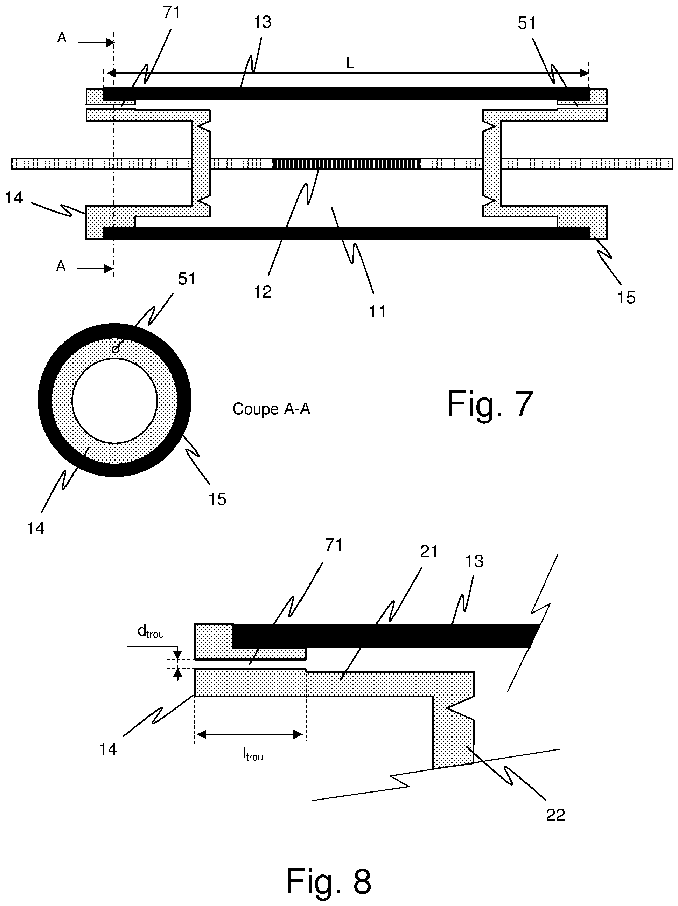

Les figures 7 et 8 présentent de manière schématique la structure d'une variante de réalisation alternative du dispositif selon l'invention. Dans cette forme alternative, le corps cylindrique 13 ne présente pas d'orifice 16. En revanche, des orifices de traversée 71 sont ici pratiqués dans l'épaisseur des bouchons 14 et 15.

Par rapport à la forme de réalisation générale présentée précédemment et illustrée par les figures 1 et 2, cette forme de réalisation permet avantageusement d'une part de laisser le corps cylindrique 13 indemne de tout perçage et d'autre part d'obtenir des orifices présentant une longueur l$_{trou}$ supérieure à l'épaisseur de la paroi du corps cylindrique et donc de concevoir des hydrophones présentant une fréquence de Helmholtz plus basse que dans la forme de réalisation précédente (cf. relation [3]).

Il est à noter que dans la mesure où la présence d'un ou plusieurs orifices de traversée 16 correspond à une caractéristique essentielle de l'invention, le dispositif selon l'invention comporte de tels orifices quel que soit le mode de réalisation envisagé.

Cependant au lieu d'être constitué d'un ou plusieurs trous pratiqués dans le corps cylindrique 13 ou dans les bouchons 14 et 15, la fonction des orifices de traversée 16 peut, dans un exemple ne faisant pas partie de l'invention, où le corps rigide 13, ou bien une partie du corps rigide est réalisé dans un matériau poreux, être remplie par les pores du matériau.

De même, dans un exemple ne faisant pas partie de l'invention, où les bouchons sont réalisés, en partie ou en totalité, dans un matériau poreux, la fonction des orifices de traversée 16 peut être remplie par les pores du matériau.

**Revendications**

1. Hydrophone à cavité laser du type comportant un élément de fibre optique active (12) avec des réseaux de Bragg inscrits dans la fibre optique formant la cavité laser, comportant une structure mécanique définissant une cavité (11) remplie d'un fluide, à l'intérieur de laquelle l'élément de fibre optique (12) est placé le long de l'axe longitudinal de la cavité, la structure mécanique comportant en outre:

   - un corps rigide (13) creux définissant la cavité (11) à l'intérieur de laquelle est placé l'élément de fibre optique (12), le corps rigide étant sensiblement cylindrique et/ou à symétrie de révolution autour de l'axe longitudinal,
   - deux bouchons (14, 15) configurés et agencés pour obturer les extrémités du corps rigide (13), traversés par l'élément de fibre optique (12), ledit élément de fibre optique (12) étant fixé aux bouchons (14, 15) au niveau des points de traversée de façon à être en permanence en tension, l'hydrophone étant **caractérisé en ce que** : les deux bouchons (14, 15) présentent chacun une partie rigidement liée au corps rigide (13) et une partie mobile comprenant une paroi déformable (22) apte à être déformée lorsqu'elle est soumise à des variations de la pression exercée par le milieu extérieur dans lequel est plongé l'hydrophone, la déformation des bouchons entraînant une variation de la longueur de l'élément de fibre optique (12), chacun des deux bouchons présentant une forme de corps creux ouvert à une extrémité étant inséré dans la cavité (11) définie par le corps rigide (13) de façon à en obturer l'extrémité, le corps creux présentant une paroi latérale (21) définissant une cavité interne (23) et la paroi déformable, perpendiculaire à l'axe longitudinal de la cavité (11) et obturant l'extrémité de la cavité interne (23), la paroi latérale (21) comprenant un segment C distant de la paroi interne du corps rigide (13) de sorte à se déformer librement dans le sens longitudinal sous l'effet d'une variation de la température du milieu extérieur dans lequel est plongé l'hydrophone, entraînant une variation de la longueur de l'élément de fibre optique (12) qui compense au moins partiellement les variations de la fréquence d'émission de la cavité laser consécutives à ces variations de température,
la structure mécanique comportant en outre un orifice de traversée (16) configuré pour faire communiquer la cavité (11) avec le milieu extérieur et réaliser un équilibrage de la pression statique entre le milieu extérieur et le fluide contenu dans la cavité (11).

2. Hydrophone optique selon la revendication précédente, dans lequel le corps rigide est un cylindre de révolution, un hyperboloïde ou un ellipsoïde généralisé.

3. Hydrophone optique selon l'une quelconque des revendications précédentes, dans lequel l'hydrophone présente un plan de symétrie perpendiculaire à l'axe longitudinal.

4. Hydrophone optique selon l'une quelconque des revendications précédentes, **caractérisé en ce que** l'orifice de traversée (16) est un orifice circulaire pratiqué à travers la paroi du corps rigide (13).

5. Hydrophone optique selon l'une quelconque des revendications précédentes, **caractérisé en ce que** l'orifice de traversée (16) est un orifice circulaire pratiqué longitudinalement dans l'épaisseur de la paroi latérale (21) d'un bouchon (14, 15).

6. Hydrophone optique selon l'une quelconque des revendications précédentes, dans lequel le fluide contenu dans la cavité (11) est peu ou pas visqueux et dans lequel les dimensions, longueur $l_{trou}$ et section $S_{trou}$, de l'orifice de traversée (16) sont déterminées, compte tenu de la viscosité du fluide contenu dans la cavité (11) de l'hydrophone, de façon que la cavité (11) de l'hydrophone présente , compte tenu de son volume $V_{cavité}$, une loi de variation de sa sensibilité, en fonction de la fréquence de variations de pression, comprenant une sensibilité sensiblement constante sur une plage donnée (53) de fréquences, inférieures à la fréquence F2, comprise entre la fréquence F2, correspondant au pic de résonance mécanique (52) de la cavité (11), et un pic de résonance (51) à une fréquence F1 égale à la fréquence de Helmholtz $f_H$ de la cavité (11) définie par:

$$f_H = \frac{c}{2\pi}\sqrt{\frac{S_{trou}}{V_{cavité}l_{trou}}}$$

Où c représente la célérité des ondes acoustiques dans le fluide considéré,
où la fréquence de Helmholtz $f_H$ est la plus faible possible.

7. Hydrophone optique selon l'une quelconque des revendications 1 à 5, dans lequel le fluide contenu dans la cavité (11) est visqueux et dans lequel les dimensions, longueur $l_{trou}$ et section $S_{trou}$, de l'orifice de traversée (16) sont déterminées, compte tenu de la viscosité du fluide contenu dans la cavité (11) de l'hydrophone, de façon que la cavité (11) de l'hydrophone présente, compte tenu de son volume $V_{cavité}$, une loi de variation de sa sensibilité, en fonction de la fréquence de variations de pression, comprenant une sensibilité sensiblement constante sur une plage donnée (53) de fréquences, inférieures à la fréquence F2, comprise entre la fréquence F2, correspondant au pic de résonance mécanique (52) de la cavité (11) et un pic de résonance (51) à une fréquence F1 et égale à la fréquence de coupure $f_p$ de la cavité (11) définie par la relation:

$$f_P = \frac{R_{trou}^4 \rho c^2}{16\eta l_{trou} V_{cavité}}$$

où $\rho$ représente la masse volumique du fluide, c la célérité des ondes sonores dans le fluide et $R_{trou}$ le rayon de

l'orifice (16), η est la viscosité du fluide, où la fréquence de coupure fp est la plus faible possible.

8. Hydrophone optique selon l'une quelconque des revendications précédentes, dans lequel la paroi latérale (21) comprend un premier segment B en contact étroit avec la paroi interne du corps rigide (13) de façon à assurer une liaison rigide entre le corps rigide (13) et le bouchon (14, 15).

9. Hydrophone optique selon la revendication précédente, dans lequel la cavité interne (23) est délimitée par le premier segment B et le segment C, le premier segment B présentant un diamètre extérieur supérieur à celui du segment C.

10. Hydrophone optique selon l'une quelconque des revendications précédentes, **caractérisé en ce que** la paroi latérale (21) comporte en outre un segment terminal A dont l'épaisseur définit un épaulement qui vient en butée sur l'extrémité du corps rigide (13) lorsque le bouchon (14, 15) est mis en place sur celui-ci.

11. Hydrophone optique selon l'une quelconque des revendications précédentes, **caractérisé en ce que** la cavité (11) contient une mousse ouverte, ladite mousse étant imbibée du fluide contenu dans la cavité (11), le matériau constituant la mousse amortissant les modes propres de résonance de l'élément de fibre optique (12).

12. Hydrophone optique selon l'une quelconque des revendications précédentes, dans lequel la longueur x de la partie

$$x = \frac{L_{fibre}}{2(\alpha_{piston} - \alpha_{tube})} \cdot \left( \alpha_{tube} + \frac{1}{Kn} \cdot \frac{dn}{dT} \right)$$

mobile selon l'axe longitudinal, est définie par la relation suivante :
où $L_{fibre}$ est la longueur de la fibre optique entre les bouchons, $\alpha_{tube}$ et $\alpha_{piston}$ représentent les coefficients de dilatation thermique des matériaux constituant respectivement le corps rigide (13) et les bouchons (14, 15) ou, du moins, la section libre C, n représente l'indice de la cavité, dn/dT la variation de l'indice de la cavité par unité de température, K étant égal à 0,78.

13. Hydrophone optique selon l'une quelconque des revendications précédentes, dans lequel chacun des deux bouchons délimite une cavité sensiblement cylindrique, et dans lequel le corps rigide est sensiblement cylindrique.

**Patentansprüche**

1. Hydrophon mit Laserhohlraum des Typs, der ein aktives Lichtleitfaserelement (12) mit Bragg-Gittern umfasst, die in die den Laserhohlraum bildende Lichtleitfaser eingeschrieben sind, mit einer mechanischen Struktur, die einen mit einem Fluid gefüllten Hohlraum (11) definiert, in dem das Lichtleitfaserelement (12) entlang der Längsachse des Hohlraums angeordnet ist, wobei die mechanische Struktur ferner Folgendes umfasst:

- einen hohlen starren Körper (13), der den Hohlraum (11) definiert, innerhalb dessen das Lichtleitfaserelement (12) angeordnet ist, wobei der starre Körper im Wesentlichen zylindrisch und/oder rotationssymmetrisch um die Längsachse ist,
- zwei Stopfen (14, 15), konfiguriert und ausgelegt zum Verschließen der Enden des von dem Lichtleitfaserelement (12) durchquerten starren Körpers (13), wobei das Lichtleitfaserelement (12) an den Durchgangsstellen an den Stopfen (14, 15) befestigt ist, so dass es permanent gespannt ist, wobei das Hydrophon **dadurch gekennzeichnet ist, dass**:

die beiden Stopfen (14, 15) jeweils einen starr mit dem starren Körper (13) verbundenen Teil und einen beweglichen Teil mit einer verformbaren Wand (22) aufweisen, die sich verformen kann, wenn sie Druckschwankungen seitens der Außenumgebung ausgesetzt ist, in die das Hydrophon eingetaucht ist, wobei die Verformung der Stopfen eine Änderung der Länge des Lichtleitfaserelements (12) bewirkt, wobei jeder der beiden Stopfen in Form eines an einem Ende offenen Hohlkörpers in den durch den starren Körper (13) definierten Hohlraum (11) eingeführt wird, um dessen Ende zu verschließen, wobei der Hohlkörper eine Seitenwand (21) aufweist, die einen inneren Hohlraum (23) und die verformbare Wand senkrecht zur Längsachse des Hohlraums (11) und das Ende des inneren Hohlraums (23) verschließend definiert, wobei die Seitenwand (21) ein von der Innenwand des starren Körpers (13) beabstandetes Segment C aufweist, um sich unter der Wirkung einer Änderung der Temperatur der Außenumgebung, in das das Hydrophon eingetaucht ist, in Längsrichtung frei zu verformen, was zu einer Änderung der Länge des Lichtleitfaserelements (12) führt, die zumindest teilweise die auf diese Temperaturänderungen folgenden Änderungen der Emissionsfrequenz des Laserhohlraums kompensiert,
wobei die mechanische Struktur ferner eine Durchführungsöffnung (16) aufweist, die zum Herstellen einer Verbindung zwischen dem Hohlraum (11) und der Außenumgebung und zum Erzielen eines Ausgleichs des statischen Drucks zwischen der Außenumgebung und dem im Hohlraum (11) enthaltenen Fluid konfiguriert ist.

2. Optisches Hydrophon nach dem vorhergehenden Anspruch, wobei der starre Körper ein Drehzylinder, ein Hyperboloid oder ein allgemeines Ellipsoid ist.

3. Optisches Hydrophon nach einem der vorhergehenden Ansprüche, wobei das Hydrophon eine Symmetrieebene senkrecht zur Längsachse aufweist.

4. Optisches Hydrophon nach einem der vorhergehenden Ansprüche, **dadurch gekennzeichnet, dass** die Durchführungsöffnung (16) eine kreisförmige Öffnung durch die Wand des starren Körpers (13) ist.

5. Optisches Hydrophon nach einem der vorhergehenden Ansprüche, **dadurch gekennzeichnet, dass** die Durchgangsöffnung (16) eine kreisförmige Öffnung, welche längsseitig in der Dicke der Seitenwand (21) eines Stopfens (14, 15) gebildet ist.

6. Optisches Hydrophon nach einem der vorhergehenden Ansprüche,

wobei das im Hohlraum (11) enthaltene Fluid eine geringe oder keine Viskosität aufweist und wobei Abmessungen, Länge $l_{Loch}$ und Querschnitt $S_{Loch}$ der Durchführungsöffnung (16) unter Berücksichtigung der Viskosität des im Hohlraum (11) des Hydrophons enthaltenen Fluids so bestimmt sind, dass der Hohlraum (11) des Hydrophons unter Berücksichtigung seines Volumens $V_{Hohlraum}$ ein Gesetz der Veränderung seiner Empfindlichkeit in Abhängigkeit von der Druckänderungsfrequenz hat, einschließlich einer Empfindlichkeit, die über einen gegebenen Bereich (53) von Frequenzen, die niedriger als die Frequenz F2 sind, im Wesentlichen konstant ist und zwischen der Frequenz F2, die der mechanischen Resonanzspitze (52) des Hohlraums (11) entspricht, und einer Resonanzspitze (51) bei einer Frequenz F1 gleich der Helmholtz-Frequenz $f_H$ des Hohlraums (11) liegt, definiert durch:

$$f_H = \frac{c}{2\pi}\sqrt{\frac{S_{Loch}}{V_{Hohlraum}l_{Loch}}}$$

wobei c die Schallwellengeschwindigkeit in dem betrachteten Fluid ist,
wobei die Helmholtz-Frequenz $f_H$ so niedrig wie möglich ist.

7. Optisches Hydrophon nach einem der Ansprüche 1 bis 5,

wobei das im Hohlraum (11) enthaltene Fluid viskos ist und wobei Abmessungen, Länge $l_{Loch}$ und Querschnitt $S_{Loch}$ der Durchgangsöffnung (16) unter Berücksichtigung der Viskosität des im Hohlraum (11) des Hydrophons enthaltenen Fluids so bestimmt sind, dass der Hohlraum (11) des Hydrophons unter Berücksichtigung seines Volumens $V_{Hohlraum}$ ein Gesetz der Veränderung seiner Empfindlichkeit in Abhängigkeit von der Druckänderungsfrequenz hat, einschließlich einer Empfindlichkeit, die über einen gegebenen Bereich (53) von Frequenzen, die niedriger als die Frequenz F2 sind, im Wesentlichen konstant ist und zwischen der Frequenz F2, die der mechanischen Resonanzspitze (52) des Hohlraums (11) entspricht, und einer Resonanzspitze (51) bei einer Frequenz F1 und gleich der Grenzfrequenz $f_p$ des Hohlraums (11) liegt, definiert durch die Beziehung:

$$f_P = \frac{R_{Loch}^{4}\rho c^2}{16\eta l_{Loch} V_{Hohlraum}}$$

wobei p die Volumenmasse des Fluids, c die Schallwellengeschwindigkeit im Fluid und $R_{Loch}$ der Radius der Öffnung (16), η die Viskosität des Fluids ist,
wobei die Grenzfrequenz $f_p$ so niedrig wie möglich ist.

8. Optisches Hydrophon nach einem der vorhergehenden Ansprüche, wobei die Seitenwand (21) ein erstes Segment B in engem Kontakt mit der Innenwand des starren Körpers (13) umfasst, um eine starre Verbindung zwischen dem starren Körper (13) und dem Stopfen (14, 15) zu gewährleisten.

9. Optisches Hydrophon nach dem vorhergehenden Anspruch, wobei der innere Hohlraum (23) durch das erste Segment B und das Segment C begrenzt ist, wobei das erste Segment B einen größeren Außendurchmesser hat als das Segment C.

10. Optisches Hydrophon nach einem der vorhergehenden Ansprüche, **dadurch gekennzeichnet, dass** die Seitenwand (21) ferner ein Endsegment A umfasst, dessen Dicke eine Schulter definiert, die an das Ende des starren Körpers (13) anstößt, wenn der Stopfen (14, 15) darauf gesetzt wird.

11. Optisches Hydrophon nach einem der vorhergehenden Ansprüche, **dadurch gekennzeichnet, dass** der Hohlraum (11) einen offenen Schaum enthält, wobei der Schaum mit dem im Hohlraum (11) enthaltenen Fluid imprägniert ist, wobei das den Schaum bildende Material die Resonanzeigenmoden des Lichtleitfaserelements (12) dämpft.

12. Optisches Hydrophon nach einem der vorhergehenden Ansprüche, wobei die Länge x des beweglichen Teils entlang

$$x = \frac{L_{Faser}}{2(\alpha_{Kolben} - \alpha_{Rohr})} \cdot \left( \alpha_{Rohr} + \frac{1}{Kn} \cdot \frac{dn}{dT} \right)$$

der Längsachse durch die folgende Beziehung definiert ist:
, wobei $L_{Faser}$ die Länge der Lichtleitfaser zwischen den Stopfen ist, $\alpha_{Rohr}$ und $\alpha_{Kolben}$ die Wärmeausdehnungskoeffizienten der Materialien darstellen, die den starren Körper (13) bzw. die Stopfen (14, 15) oder zumindest die freie Querschnittsfläche C bilden, n den Index des Hohlraums darstellt, dn/dT die Änderung des Index des Hohlraums pro Temperatureinheit ist, wobei K gleich 0,78 ist.

13. Optisches Hydrophon nach einem der vorhergehenden Ansprüche, wobei jeder der beiden Stopfen einen im Wesentlichen zylindrischen Hohlraum definiert, und wobei der starre Körper im Wesentlichen zylindrisch ist.

**Claims**

1. A laser cavity hydrophone of the type comprising an active optical fiber element (12) with Bragg gratings inscribed in the optical fiber forming the laser cavity, having a mechanical structure defining a cavity (11) filled with a fluid, inside which the optical fiber element (12) is placed along the longitudinal axis of the cavity, the mechanical structure further comprising:

   - a hollow rigid body (13) defining the cavity (11) inside which is placed the optical fiber element (12), the rigid body being substantially cylindrical and/or rotationally symmetrical about the longitudinal axis;
   - two end caps (14, 15) configured and designed to seal the ends of the rigid body (13) traversed by the optical fiber element (12), said optical fiber element (12) being fixed to the end caps (14, 15) at the level of the points of traversal so as to be permanently under tension; the hydrophone being **characterized in that**:

      the two end caps (14, 15) each exhibit a part rigidly tied to the rigid body (13) and a mobile part having a deformable wall (22) able to be deformed when it is subjected to variations in the pressure exerted by the exterior medium in which the hydrophone is immersed;
      the deformation of the end caps giving rise to a variation of the length of the optical fiber element (12), each of the two end caps exhibiting a hollow body shape open at one end being inserted into the cavity (11) defined by the rigid body (13) so as to seal the end thereof, the hollow body exhibiting a side-wall (21) defining an internal cavity (23) and the deformable wall (22) perpendicular to the longitudinal axis of the cavity (11), and sealing the end of the internal cavity (23), the side-wall (21) comprising a segment C distant from the internal wall of the rigid body (13) so as to deform freely in the longitudinal direction under the action of the temperature variations of the exterior medium in which the hydrophone is immerged, giving rise to a variation of the length of the optical fiber element (12) which at least partially compensates the variations of the emission frequency of the laser cavity as a result of these temperature variations, the mechanical structure further having a through orifice (16) configured to allow communication between the cavity (11) and the exterior medium and to achieve equilibration of the static pressure between the exterior medium and the fluid contained in the cavity (11).

2. The optical hydrophone according to the preceding claim, wherein the rigid body is a cylinder of revolution, a hyperboloid or a generalized ellipsoid.

3. The optical hydrophone according to any one of the preceding claims, wherein the hydrophone exhibits a symmetry plane perpendicular to the longitudinal axis.

4. The optical hydrophone according to any one of the preceding claims, **characterized in that** the through orifice (16) is a circular orifice made through the wall of the rigid body (13).

5. The optical hydrophone according to any one of the preceding claims, **characterized in that** the through orifice (16) is a circular orifice made longitudinally in the thickness of the side-wall (21) of an end cap(14, 15).

6. The optical hydrophone according to any one of the preceding claims,

   wherein the fluid contained in the cavity (11) is slightly viscous or non-viscous and wherein the dimensions, length $l_{hole}$ and cross-section $S_{hole}$, of the through orifice (16) are determined in such a way that, having regard to the viscosity of the fluid contained in the hydrophone cavity (11), the hydrophone cavity (11) exhibits, having regard to its volume $V_{cavity}$, a law of variation of its sensitivity, as a function of the frequency of variations of pressure, comprising a substantially constant sensitivity on a given span (53) of frequencies, lower than the frequency F2, lying between the frequency F2, corresponding to the mechanical resonance peak (52) of the cavity (11) and a resonance peak (51) at a frequency F1 equal to the Helmholtz frequency $f_H$ of the cavity defined by:

   $$f_H = \frac{c}{2\pi} \sqrt{\frac{S_{hole}}{V_{cavity} l_{hole}}}$$

   where c represents the velocity of the acoustic waves in the considered fluid,
   where the Helmholtz frequency $f_H$ is as low as possible

7. The optical hydrophone according to any of claims 1 to 5,

   wherein the fluid contained in the cavity (11) is viscous, and wherein the dimensions, length $l_{hole}$ and cross-section $S_{hole}$, of the through orifice (16) are determined in such a way that, having regard to the viscosity of the fluid contained in the hydrophone cavity (11), the hydrophone cavity (11) exhibits, having regard to its volume $V_{cavity}$, a law of variation of its sensitivity, as a function of the frequency of variations of pressure, comprising a substantially constant sensitivity on a given span (53) of frequencies, lower than the frequency F2, lying between the frequency F2, corresponding to the mechanical resonance peak (52) of the cavity (11) and a resonance peak (51) at a frequency F1 and equal to the cutoff frequency $f_p$ of the cavity (11) defined by the relation:

   $$f_P = \frac{R_{hole}^{4} \rho c^{2}}{16\eta l_{hole} V_{cavity}}$$

   where $\rho$ represents the density of the fluid, c the velocity of the acoustic waves in the fluid and $R_{hole}$ the radius of the orifice (16), $\eta$ the viscosity of the fluid,
   where the cutoff frequency fp is as low as possible.

8. The optical hydrophone according to any one of the preceding claims, wherein the side-wall (21) comprises a first segment B in tight contact with the internal wall of the rigid body (13), so as to ensure a rigid link between the rigid body (13) and the end cap (14, 15).

9. The optical hydrophone according to the preceding claim, wherein the internal cavity (23) is delimited by the first segment B and segment C, the first segment B exhibiting a larger external diameter than the segment C.

10. The optical hydrophone according to any one of the preceding claims, **characterized in that** the side-wall (21) further comprises an end-segment A whose thickness defines a shoulder which abuts the end of the rigid body (13) when the end cap (14, 15) is put in place on the latter.

11. The optical hydrophone according to any one of the preceding claims, **characterized in that** the cavity (11) contains an open foam, said foam being soaked with the fluid contained in the cavity (11), the material constituting the foam being defined so as to damp the resonant modes of the optical fiber element (12).

12. The optical hydrophone according to any one of the preceding claims, in which the length x of the mobile part along the longitudinal axis is defined by the following relation:

$$x = \frac{L_{fiber}}{2(\alpha_{piston} - \alpha_{tube})} \cdot \left( \alpha_{tube} + \frac{1}{Kn} \cdot \frac{dn}{dT} \right)$$

where $L_{fiber}$ is the length of the fiber between the caps, $\alpha_{tube}$ and $\alpha_{piston}$ represent the coefficients of thermal expansion of the materials constituting respectively the cylindrical body (13) and the end caps (14, 15) or, at least, the free cross-section C, n represents the index of the cavity, dn/dT the variation in the index of the cavity per temperature unit, K being equal to 0.78.

13. The optical hydrophone according to any one of the preceding claims, wherein each one of the two caps delimits a cavity which is substantially cylindrical and wherein the rigid body is substantially cylindrical.

Fig. 1

Coupe A-A

Coupe B-B

Fig. 2

Fig. 3

Fig. 4

Fig. 5

Fig. 6

Coupe A-A

Fig. 7

Fig. 8

**EP 2 697 612 B1**

## RÉFÉRENCES CITÉES DANS LA DESCRIPTION

### Documents brevets cités dans la description

- WO 2010135723 A